# EUROPEAN PATENT APPLICATION

(11) **EP 3 611 351 A1**
(43) Date of publication of application: **19.02.2020**
(21) Application number: 19188860.1
(22) Date of filing: 29.07.2019
(51) Int. Cl.: F01D 11/14, B01D 45/04, F01D 25/32, F02C 7/18, F01D 11/24, F01D 9/06, F02C 7/052, B01D 45/06, F02C 9/18

(54) **A TURBINE-TIP CLEARANCE CONTROL SYSTEM OFFTAKE**

(30) Priority: 15.08.2018 GB 201813308
(71) Applicant: Rolls-Royce plc, London SW1E 6AT (GB)
(72) Inventor: Bewick, Clare, Derby, Derbyshire DE24 8BJ (GB); Goulds, Robert, Derby, Derbyshire DE24 8BJ (GB)
(74) Representative: Rolls-Royce plc

(57) **Abstract**

A turbine-tip clearance control system offtake (101) for a gas turbine engine (10), comprising: an air input duct (110) in fluid communication with a compressor bleed air outlet (112), the air input duct (110) comprising an exit aperture (114), the exit aperture (114) defining an exit flow path for at least a portion of the air flowing in the air input duct (110) during use of the gas turbine engine (10). The direction of airflow through the exit aperture (114), during use of the gas turbine engine (10), has at least a component that is anti-parallel to the direction of airflow in the air input duct (110) in a region of the air input duct (110) adjacent to the exit aperture (114). A turbine-tip clearance control system (100), a gas turbine engine (10) for an aircraft and a method (200) of supplying airflow to a turbine-tip clearance control system in a gas turbine engine are also disclosed.

## Description

### TECHNICAL FIELD

The present disclosure relates to a turbine-tip clearance control system offtake for a gas turbine engine. In particular, a gas turbine engine for an aircraft.

### BACKGROUND

In order to ensure efficient operation of a gas turbine engine it is important to control the clearance between the tips of rotating blades found in a compressor or turbine and a surrounding static structure such as a casing or shroud. By minimising the tip clearance the leakage of gases between the shroud and the blade tips may be reduced, thereby improving engine efficiency.

There are a number of known methods of controlling the size of the blade tip clearance by providing a suitable turbine-tip clearance control (TTCC) system. Known TTCC systems blow cool air onto the turbine casings causing the casings to contract and hence reduce the tip clearance. These systems can either be on/off, high/low flow or provide a continuous modulation of the level of flow to maintain an ideal tip clearance between the turbine blades and the casing.

In known gas turbine engines the bypass duct air may provide a suitable supply of TTCC system feed air at minimal cost to overall engine efficiency. For gas turbine engines with a relatively low bypass pressure however, the driving pressure of the bypass duct air available to feed a TTCC system is reduced. This may lead to the use of large valves and ducts to reduce pressure losses in the TTCC system. It may also require a large ram scoop in the bypass duct, which may lead to significant undesired drag within the bypass duct. Any additional components required to reduce pressure loss may add overall weight and complexity, and may take up a large amount of space in the engine.

Although other sources of pressurised air may be available for use in the TTCC system there are drawbacks associated with their use.

### SUMMARY

According to a first aspect there is provided a turbine-tip clearance control (TTCC) system offtake for a gas turbine engine, comprising: an air input duct in fluid communication with a compressor bleed air outlet, the air input duct comprising an exit aperture, the exit aperture defining an exit flow path for at least a portion of the air flowing in the air input duct during use of the gas turbine engine, wherein the direction of airflow through the exit aperture, during use of the gas turbine engine, has at least a component that is anti-parallel to the direction of airflow in the air input duct in a region of the air input duct adjacent to the exit aperture.

An alternative source of pressurised air for the TTCC system is a compressor bleed air outlet. Such a compressor bleed air outlet may be provided to supply air to other engine systems (e.g. for compressor stability control) and to extract rain, hail and foreign object debris (FOD) from the core gas flow path through the engine. Air entering the air input duct via the compressor bleed air outlet may therefore have a high concentration of water and/or particulate matter which it would be undesirable to send into the TTCC system.

The anti-parallel direction of airflow through the exit aperture compared to the air flow in the input duct means that the level of foreign objects passing through the exit aperture from the air input duct may be reduced. The exit aperture therefore acts to separate foreign objects from the airflow used by the TTCC system, with those foreign objects continuing down the air input duct. This allows the compressor bleed air outlet to be used to supply air to the TTCC system, despite the high level of foreign objects entering through it. This may avoid the need to provide additional air offtakes within the engine to supply the TTCC system. For example, the use of a separate additional compressor offtake duct may be avoided. Similarly, the use of an additional offtake duct to supply the TTCC system with bypass duct air may also be avoided. This may reduce overall engine complexity and weight.

A TTCC system supplied from the compressor bleed air outlet may be more compact, lighter and removes inlet drag from the bypass duct if it were to be used as a source of bleed air. Furthermore, problems associated with low air pressure within the bypass duct may be avoided, such as the use of a large bypass duct inlet for the TTCC system and large valves to reduce pressure loss. Positioning of a bypass duct outlet for the TTCC system close to fan outlet guide vanes may also be avoided, thus reducing the impact on fan performance and structural stresses on the guide vanes.

The exit aperture may be formed in a wall of the air input duct.

The exit aperture may be formed in a hollow protrusion formed in the wall of the air input duct.

The exit aperture may be formed in a downstream portion of the protrusion relative to the direction of airflow in the air input duct.

The hollow protrusion may define a region of lower pressure compared to the pressure in the region of the air input duct adjacent to the exit aperture.

The exit aperture may lie in an aperture plane. The aperture plane may be angled relative to a plane parallel to at least part of a region of the wall of the air input duct surrounding exit aperture.

The angle of the aperture plane may be between 5 degrees and 135 degrees. Preferably the angle may be between 80 degrees and 120 degrees.

The exit aperture may have an aperture axis extending through the exit aperture orthogonal to the aperture plane. The exit aperture may be orientated such that a direction parallel to the aperture axis into the exit aperture has at least a component antiparallel to the direction of air flowing in the adjacent region of the air input duct.

The exit aperture may be orientated such that a direction parallel to the aperture axis and pointing into the exit aperture has at least a component antiparallel to a longitudinal axis of the air input duct.

The exit aperture may be in fluid communication with a TTCC system offtake duct. The turbine-tip clearance control system offtake may further comprise a separator plate arranged between the TTCC system offtake duct and the air input duct, the exit aperture being formed in the separator plate.

The exit aperture may be formed by a scoop profile pressed into the separator plate.

The compressor bleed air outlet may be formed in a casing of the compressor. The casing may define a duct through which compression air flows through the compressor.

The compressor bleed air outlet may be adapted to remove foreign objects from the airflow through the compressor.

The bleed air outlet may be disposed at or near a point at which a change in direction of the airflow through the compressor occurs.

The compressor may comprise an annular duct defining the airflow path through the compressor. The annular duct may comprise a connecting region arranged to connect portions of the annular duct having a different outer radius to each other (e.g. a swan-neck duct), wherein the compressor bleed air outlet is disposed in or near the connecting region.

The air input duct may be further arranged to provide a supply of pressurised air to a secondary system of the gas turbine engine in addition to the TTCC system.

The air input duct may be further arranged to provide a supply of pressured air to any or more of: a compressor stability control system; an air to oil heat exchanger; and an air to air heat exchanger.

According to a second aspect, there is provided a TTCC system for a gas turbine engine, comprising: the TTCC system offtake according to the first aspect; a valve fluidly coupled to the exit aperture of the TTCC system offtake to receive airflow from the air input duct; a connection duct fluidly coupled to the valve; and a delivery system fluidly coupled to the connection duct, wherein the delivery system is arranged to deliver airflow from the TTCC system offtake to a casing of a turbine of the gas turbine engine.

According to a third aspect, there is provided a gas turbine engine for an aircraft, the gas turbine engine comprising the turbine-tip clearance control system of the second aspect.

The gas turbine engine may further comprise: an engine core comprising a turbine, a compressor, and a core shaft connecting the turbine to the compressor; a fan located upstream of the engine core, the fan comprising a plurality of fan blades; and a gearbox that receives an input from the core shaft and outputs drive to the fan so as to drive the fan at a lower rotational speed than the core shaft, wherein the compressor bleed air outlet is arranged to receive air from the compressor.

According to a fourth aspect, there is provided a method of supplying airflow to a turbine-tip clearance control system in a gas turbine engine, comprising: providing an air input duct in fluid communication with a compressor bleed air outlet, the air input duct comprising an exit aperture, the exit aperture defining an exit flow path for at least a portion of the air flowing in the air input duct during use of the gas turbine engine; and separating foreign objects from the airflow in the air input duct by directing airflow through the exit aperture, the airflow being directed such that it has at least a component that is anti-parallel to the direction of airflow in the air input duct in a region of the input duct adjacent to the exit aperture.

Any of the features defined in the statements above in connection with the first aspect may be used in combination with the second aspect or the third aspect or the fourth aspect.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

Embodiments will now be described by way of example only, with reference to the Figures, in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine;
Figure 4 is a schematic view of a turbine-tip clearance control system;
Figure 5 is a close up view at point B marked in Figure 4;
Figure 6 is a close up view in the direction of arrow C marked on Figure 4;
Figure 7 is a close up view of region D marked in Figure 6;
Figure 8 is a cross section through plane EE marked in Figure 7;
Figure 9 is a close up view in the direction of arrow F marked in Figure 8; and
Figure 10 is a schematic view of part of a turbine-tip clearance control system according to another embodiment;
Figure 11 is an alternative embodiment of the part of the turbine-tip clearance control system shown in Figure 8; and
Figure 12 is a method of turbine-tip clearance control.

### DETAILED DESCRIPTION

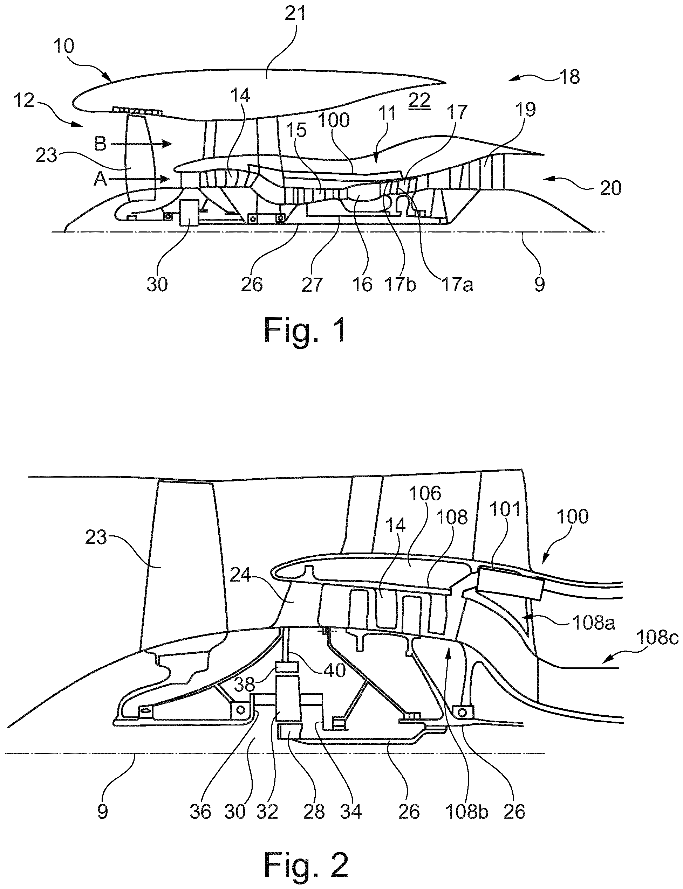

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

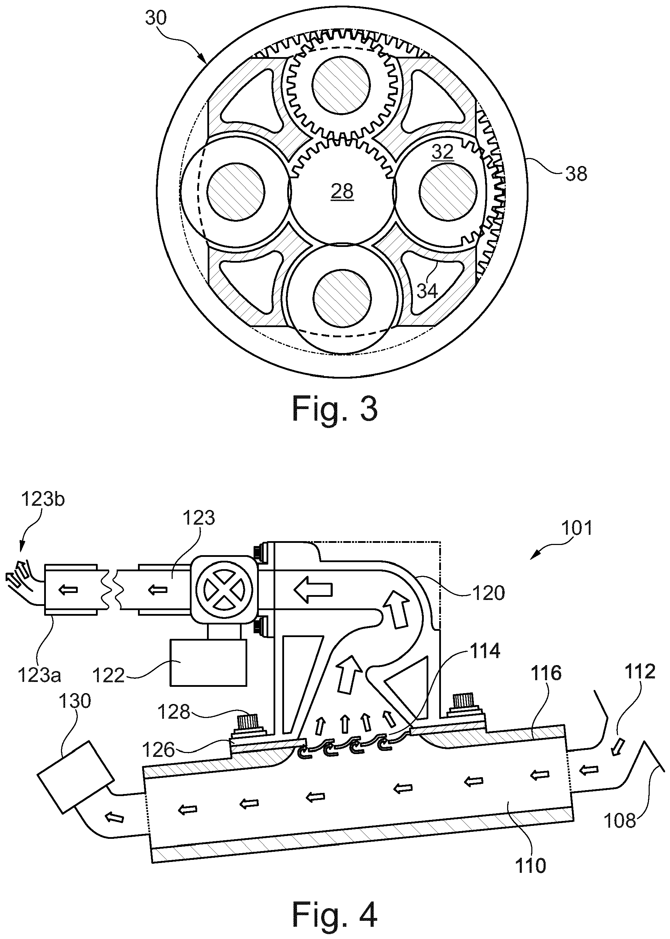

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

Referring again to Figure 1, the gas turbine engine 10 further comprises a turbine-tip clearance control (TTCC) system 100. The TTCC system is arranged to control the tip clearance of the turbine blades 17a of turbine 17 of the gas turbine engine 10. The TTCC system may be provided to control the turbine blade tip clearance of any turbine of the gas turbine engine (e.g. the intermediate pressure turbine 19 and/or high pressure turbine 17 described above, or any other turbines present in the gas turbine engine).

The TTCC system is arranged to supply a flow of air from the intercase structure 106. As illustrated in Figure 2, the TTCC system 100 comprises a TTCC system offtake 101 that is arranged to carry the flow of air from the intercase structure 106 from a point at or near the compressor 14 to for use by the TTCC system at a casing 17b around the turbine 17. This flow is controlled by a valve which is fitted in a duct supplying an impingement manifold fitted to the casing for the turbines 17 and/or 19 (as will be described in more detail later). The duct may be located in a core accessory zone of the gas turbine engine 10.

The TTCC system 100 of the described embodiment is to be understood as one example only. The present disclosure may be applicable to any TTCC system that requires a supply of pressurised air in order to cause controlled expansion and contraction of the casing of the turbine. Controlled contraction may include controlling the flow of air resulting in a change between a first level of contraction and a second level of contraction, where the first level of contraction is greater than the second. In both cases the casing may be still be contracted compared to when the gas turbine engine is not in use. The flow of air may be continuously variable between a maximum and minimum flow rate. This may allow the level of contraction to be varied continuously between the first and second contraction levels. In other embodiments, the flow of air to the compressor casing may be discretely varied between the maximum and minimum flow rates. This may vary the casing contraction discretely between the first and second contraction levels. In some embodiments, the air may, for example, be sprayed directly onto the outer wall of the turbine casing via a manifold, in other via a series of spray bars or a combination of both (or other components) to form any suitable air delivery system.

Figure 4 shows a close up schematic view of the TTCC system offtake 101. The TTCC system offtake 101 comprises an air input duct 110 in fluid communication with a compressor bleed air outlet 112. The compressor bleed air outlet 112 is formed in the casing 108 of the compressor 14. Part of the flow of air through the compressor 14 may be extracted from the duct defined by the casing 108 for use in the TTCC system 100 (e.g. via a duct 123 as will be described later). In other embodiments, the compressor bleed air outlet 112 may be provided at any suitable point within the compressor 14 such that it may receive part of the core airflow through the gas turbine engine 10. It may for example, be provided in any compressor stage provided in the gas turbine engine.

The air input air duct 110 comprises one or more exit apertures 114. The exit apertures 114 are formed in a wall 116 of the input air duct 110 such that air flowing within the air input duct 110 can flow through them. Only part of the airflow through the air input duct 110 may flow through the exit apertures 114, with the remainder continuing down a portion of the air input duct 110 downstream of the exit apertures 114. In other embodiments, all of the airflow within the air input duct 110 may flow through the exit apertures 114.

In the described embodiment, a plurality of exit apertures 114 is provided, with one of them labelled in Figure 4 for clarity. In other embodiments, only a single exit aperture may be provided. The exit apertures 114 each define an exit flow path for at least a portion of the air flowing in the air input duct 110 during use of the gas turbine engine 10.

The direction of air flow through each of the exit apertures 114, during use of the gas turbine engine 10, has at least a component that is anti-parallel to the direction of air flow in the air input duct 110 in a region of the air input duct 110 adjacent or surrounding the respective exit aperture 114.

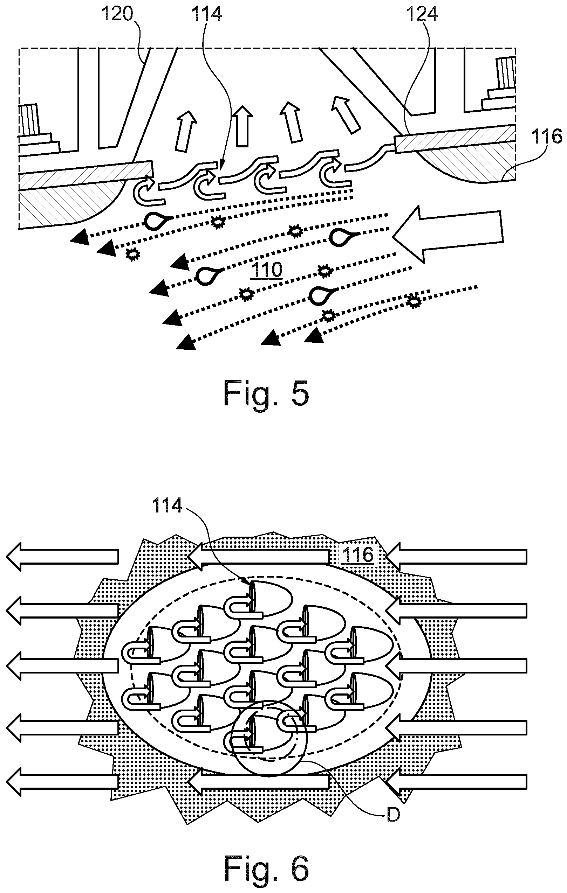

The flow through the air input duct 110 and the exit apertures 114 is shown by the arrows in Figure 4 and in the close up views of Figures 5 and 6. As can be seen in the Figures, the direction of air flowing through each one of the exit apertures 114 has a direction that has an antiparallel component compared to the flow of air in the region of the air input duct 110 surrounding that one of the apertures 114. The antiparallel flow of air acts to separate foreign objects from the air flowing within the air input duct 110. This means that foreign objects are less likely to flow through the exit apertures 114, but instead continue flowing along the air input duct 110. As can be seen in Figure 5, foreign objects such as rain, hail and other foreign object debris (FOD) that may be present in the flow of air in the air input duct 110 may be separated. These foreign objects will tend to flow only in the direction of airflow along the air input duct 110. Because of their respective momenta, foreign objects will tend to flow ballistically past the one or more exit apertures 114, rather than changing direction sufficiently to flow through the exit apertures 114.

The use of the exit apertures 114 may advantageously allow the TTCC system offtake 101 to make use of bleed air from the compressor that would otherwise be unsuitable because of the presence of foreign objects. By using bleed air from the compressor the need to use other sources of pressurised air from the gas turbine engine may be avoided. This may, for example, avoid the need to provide a separate bleed air outlet at another point in the gas turbine engine, such as to use the bypass airflow. This may reduce the overall weight and complexity of the engine, and avoid any impact on the bypass airflow. By avoiding the use of the bypass airflow a source of noise within the gas turbine engine may also be reduced.

The use of the TTCC system offtake 101 may be advantageous where the pressure of the bypass airflow is reduced. The exit apertures 114 of the present disclosure may be advantageous when used in combination with a gas turbine engine having a gearbox that receives an input from the core shaft and outputs drive to the fan so as to drive the fan at a lower rotational speed than the core shaft. In this arrangement, the low pressure of air flowing through the bypass duct may otherwise require a large intake or valves in order to provide adequate pressure for operation of the TTCC system 100. Use of compressor bleed air by the TTCC system 100 reduces the need to use lower pressure air from the bypass duct, thus reducing overall weight and complexity of the gas turbine engine.

In other embodiments, the TTCC system offtake 101 may be used with any other gas turbine engine, not just those with a fan driven at lower speed than the core shaft described herein. It may be advantageous in allowing dual use of bleed air from the compressor of any gas turbine engine, thus avoiding the need to provide bleed air to the TTCC system offtake 101 from another source.

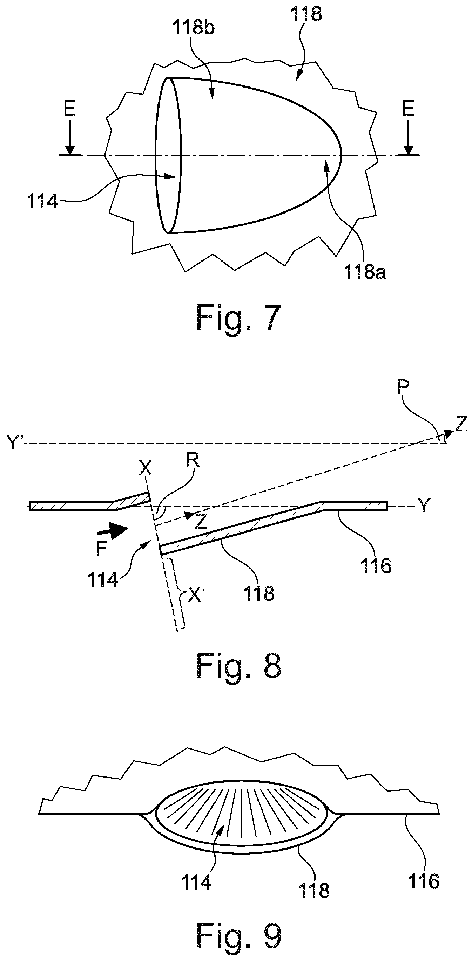

Each of the exit apertures 114 may lie in an aperture plane angled relative to a plane parallel to the surrounding region of the wall 116 of the input air duct 110. This can be seen more clearly in Figure 8, which illustrates one of the exit apertures 114 in close up. The exit aperture 114 lies in the plane labelled X which is angled relative to the plane Y, which is parallel to at least part of the region of the wall 108 of the air input duct 110 surrounding the exit aperture 114.

Each exit aperture 114 has an aperture axis Z extending through the exit aperture orthogonal to the aperture plane X. The exit aperture 114 is orientated such that a direction parallel to the aperture axis Z and pointing into the exit aperture 114 has at least a component antiparallel to the direction of air flowing in the adjacent region of the air input duct 110. By orienting the exit aperture 114 in this way the direction of air flowing into it from the air input duct 110 may have an antiparallel component.

When referring to the surrounding or adjacent region of the air input duct 110 we may mean at a point along the length of the input duct level with the location of the exit aperture 114. This may include the direction of air flowing through the aperture plane X (or similar plane crossing the input air duct 110 at the position of the exit aperture) in a part of the aperture plane outside of the exit aperture 114 (e.g. as labelled X' in Figure 8).

The angle of the aperture plane X relative to the plane Y (i.e. angle R shown in Figure 8) may be between 5 degrees and 135 degrees. Preferably, the angle may be between 80 degrees and 120 degrees. The aperture axis Z may have a corresponding angle relative to plane Y. This may provide a suitable separation of foreign objects from the airflow within the air input duct 110.

The exit aperture 114 is also orientated such that a direction parallel to the aperture axis Z and pointing into the exit aperture 114 has at least a component antiparallel to a longitudinal axis of the air input duct 110, labelled Y' in Figure 8. The angle between the aperture axis Z and the longitudinal axis Y' (labelled P in Figure 8) may be less than 85 degrees, and preferably may be less than 10 degrees.

Each exit aperture may be formed in a hollow protrusion 118 formed in the wall 116 of the air input duct 110 as illustrated in Figures 6, 7, 8 and 9. A region of the wall 116 of the air input duct 110 adjacent to the protrusion 118 is parallel to plane Y. The exit aperture 114 may be formed in a wall of the hollow protrusion 118 such that the aperture plane X is angled relative to plane Y.

The hollow protrusion 118 may comprise an upstream portion 118a and a downstream portion 118b. The upstream portion 118a is upstream of the downstream portion 118b relative to the airflow within the air input duct 110 in the region of the exit aperture 114. The exit aperture 114 may be formed in the downstream portion 118a of the protrusion 118. Forming the exit aperture 114 in the downstream portion 118a may help to avoid foreign objects within the input air duct 110 airflow flowing through it.

The hollow protrusion 118 may define region of lower pressure compared to the pressure of surrounding airflow in the air input duct 110. This may cause the airflow within the input duct to be channelled into and through the exit aperture 114.

In the described embodiment, a separate hollow protrusion 118 is provided for each exit aperture 114. In other embodiments, more than one exit aperture 114 may be provided on one hollow protrusion.

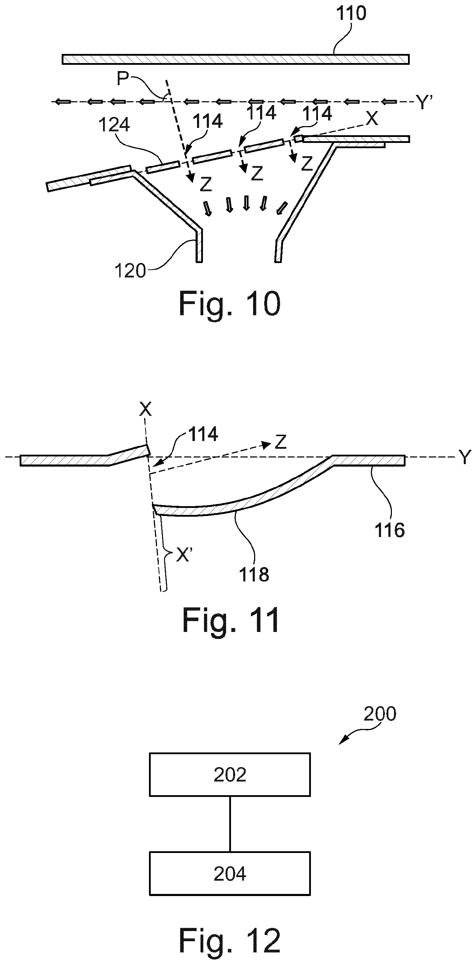

In another embodiment, the exit aperture 114 may be formed from a simple hole through the wall of the air input duct 110, rather than being formed in a protrusion as shown in Figure 8. In such an embodiment, the wall of the input duct (or a separator plate in which the exit aperture is formed) is oriented so as to provide the required angle between the aperture axis Z and the longitudinal axis of the air input duct. An example of this is shown in Figure 10. In this embodiment, the exit aperture(s) 114 have an aperture axis Z that is angled relative to the longitudinal axis Y' of the input duct 110 as shown in Figure 10. The range of angles P defined above may also apply to the embodiment of Figure 10.

Referring again to Figure 4, the TTCC system offtake 101 may further comprise a TTCC system duct 120 upstream of a valve 122 of the TTC system 100. The duct 120 may provide a supply of pressurised air to the valve 122 of the TTCC system. The valve 122 may control the flow of pressurised air for use in controlling the turbine blade tip clearance as described above.

The valve 122 may be fluidly coupled to a connection duct 123 arranged to convey airflow to a delivery system 123a at the relevant turbine (not shown in Figure 4). The delivery system 123a may comprise a manifold 123b coupled to the casing of the turbine, whereby airflow from the TTCC system offtake 101 is directed onto the casing to control the turbine blade tip clearance.

The one or more exit apertures 114 may be in fluid communication with the TTCC system offtake duct 120 such that air may flow from the air input duct 110 to the offtake duct 120. The TTCS system offtake 101 may comprise a separator plate 124 forming part of the wall 116 of the air input duct 110. The separator plate 124 divides the offtake duct 120 from the air input duct 110, with the one or more exit apertures 114 formed in the separator plate 124, and acts to separate foreign objects from the airflow.

In the described embodiment, the separator plate 124 covers a through hole or port in the wall 116 of the air input duct 110. The separator plate 124 may be sandwiched between a flange 126 at the end of the offtake duct 120 and the outer wall of the air input duct as shown in Figure 4. In this embodiment, one or more fixings such as bolts 128 may be provided to couple the offtake duct 120 and the separator plate 124 to the air input duct 110. By forming the one or more exit apertures 114 in the separator plate 126 they may be efficiently manufactured.

In other embodiments, any other suitable method of coupling the offtake duct 120 and the air input duct 110 may be provided. In other embodiments, they may be formed from a single integral component. In yet other embodiments, the separator plate 124 may be integral with the air input duct 110, i.e. the one or more exit apertures 114 may be formed directly in the wall 116 of the air input duct 110.

Each of the exit apertures 114 may be formed by a scoop profile pressed into the separator plate 124. The exit apertures 114 may have a generally elliptical cross section through aperture plane X as can be seen in Figure 9. This may provide an efficient and easy to manufacture exit aperture 114 suitable for separating foreign objects form airflow within the air input duct 110.

In other embodiments alternative methods may be used to form the one or more apertures in the separator plate 124 or directly into the wall 116 of the air input duct 110. The one or more apertures may, for example, be formed by casting, machining from solid, 3D printing or any other suitable technique.

The compressor bleed air outlet 112 may be adapted to remove foreign objects from the air flow path through the compressor 14 (i.e. from the core airflow through the gas turbine engine). The bleed air outlet 112 may, for example, be located on the casing of the compressor 14 such that foreign objects such as rain, hail and FOD tend to flow down the air input duct 110 via the bleed air outlet 112. This may allow foreign objects to be removed from the core airflow through the gas turbine engine, such that it they are less likely to reach components downstream of the compressor 14. The use of the TTCC system offtake 101 of the present disclosure may be advantageous in combination with such a bleed air outlet 112 location. In this case, the exit apertures 114 may remove an adequate level of foreign objects from the otherwise high level present in the air input duct 110 such that the airflow can be used in the TTCC system offtake 101. The TTCC system offtake 101 can however be used with other locations of the compressor bleed air outlet 112 which may not be optimised for removal of foreign objects from the core airflow, but in which foreign objects may nevertheless still be present.

Referring again to Figure 2, the casing 108 forms an annular duct having a connecting region 108a arranged to connect a first portion 108b of the annular duct having a first outer radius to a second portion 108c of the annular duct having a different second outer radius. The connecting region 108a therefore forms a swan-neck duct that may connect the compressor 104 to a further downstream component of the gas turbine engine (e.g. another compressor or the combustion apparatus described above). The first portion 108b may have a greater radius compared to the second portion 108c as shown in Figure 2. In other embodiments, the second portion 108c may have a greater radius compared to the first portion.

The bleed air outlet 112 may be disposed in or near the connecting region 108a. This may mean that the bleed air outlet 112 may be disposed at or near a point at which a change in direction of the airflow through the compressor occurs. This may allow foreign objects within the air flowing through the compressor to be collected in the bleed air outlet 112, rather than changing direction and flowing through the connecting region 108a.

The input air duct 110 may be further arranged to provide a supply of pressurised air to secondary system in addition to the TTCC system 100. As illustrated in Figure 4, the air input duct 110 may be in fluid communication with a secondary system 130 of the gas turbine engine 10. The air input duct 110 may be coupled to the secondary system 130 at a point downstream of the one or more exit apertures 114 as shown in Figure 4. In other embodiments, the secondary system 130 may be coupled at any suitable point on the air input duct 110.

The secondary system may be a compressor stability control system. In addition or alternatively, the TTCC system offtake 101 may be suitable to provide air to either an air to oil heat exchanger or an air to air heat exchanger. In both these cases, air with low levels of water, dust or other contaminants is needed in order to minimise the degradation of the cooling efficiency with time.

In an alternative embodiment, the exit apertures may have any other suitable shape. The elliptical cross section shown in Figure 9 is only one example and other more complex shaped apertures may be provided. An example of a more complex shape formed in the separator plate 124 is shown in Figure 11.

Figure 12 shows a method 200 of supplying airflow to a turbine-tip clearance control system in a gas turbine engine. The method comprises providing 202 the air input duct 110 of the TTCC system offtake 101 in fluid communication with the compressor bleed air outlet 112. The method further comprises separating 204 foreign objects from the airflow in the air input duct 110 by directing airflow through the exit aperture. The airflow is directed such that it has at least a component that is anti-parallel to the direction of airflow in the air input duct in a region of the input duct adjacent to the exit aperture as described above.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A turbine-tip clearance control (TTCC) system offtake (101) for a gas turbine engine (10), comprising:
an air input duct (110) in fluid communication with a compressor bleed air outlet (112),
the air input duct (110) comprising an exit aperture (114), the exit aperture (114) defining an exit flow path for at least a portion of the air flowing in the air input duct (110) during use of the gas turbine engine (10),
wherein the direction of airflow through the exit aperture (114), during use of the gas turbine engine (10), has at least a component that is anti-parallel to the direction of airflow in the air input duct (110) in a region of the air input duct (110) adjacent to the exit aperture (114).

2. The TTCC system offtake (101) according to claim 1, wherein the exit aperture (114) is formed in a wall (116) of the air input duct (110).

3. The TTCC system offtake (101) according to claim 2, wherein the exit aperture (114) is formed in a hollow protrusion (118) formed in the wall (116) of the air input duct (110).

4. The TTCC system offtake (101) according to claim 3, wherein:
(a) the exit aperture (114) is formed in a downstream portion (118b) of the hollow protrusion (118) relative to the direction of airflow in the air input duct (110); and/or
(b) the hollow protrusion (118) defines a region of lower pressure compared to the pressure in the region of the air input duct (110) adjacent to the exit aperture (114).

5. The TTCC system offtake (101) according to any preceding claim, wherein the exit aperture lies (114) in an aperture plane (X).

6. The TTCC system offtake (101) according to claim 5, when dependent on claim 2, wherein the aperture plane (X) is angled relative to a plane (Y) parallel to at least part of a region of the wall (116) of the input air duct (110) surrounding the exit aperture (114) and optionally or preferably wherein the angle of the aperture plane (X) is between 5 degrees and 135 degrees, and further optionally or preferably the angle is between 80 degrees and 120 degrees.

7. The TTCC system offtake (101) according to claim 5 or claim 6, wherein the exit aperture (114) has an aperture axis (Z) extending through the exit aperture (114) orthogonal to the aperture plane (X), and wherein the exit aperture (114) is orientated such that a direction parallel to the aperture axis (Z) into the exit aperture (114) has at least a component antiparallel to the direction of air flowing in the adjacent region of the air input duct (110), and optionally or preferably wherein the exit aperture (114) is orientated such that a direction parallel to the aperture axis (Z) and pointing into the exit aperture (114) has at least a component antiparallel to a longitudinal axis (Y') of the air input duct (110).

8. The TTCC system offtake (101) according to any preceding claim, wherein the exit aperture (114) is in fluid communication with a TTCC system offtake duct (120), the turbine-tip clearance control system offtake (101) further comprising a separator plate (124) arranged between the TTCC offtake duct (120) and the air input duct (110), the exit aperture (114) being formed in the separator plate (124), and optionally wherein the exit aperture (114) is formed by a scoop profile pressed into the separator plate (124).

9. The TTCC system offtake (101) according to any preceding claim, wherein the compressor bleed air outlet (112) is formed in a casing (108) of the compressor (14), the casing (108) defining a duct through which compression air flows through the compressor (14), and optionally or preferably wherein the compressor bleed air outlet (112) is adapted to remove foreign objects from the airflow through the compressor (104), and further optionally or preferably wherein the compressor bleed air outlet (112) is disposed at or near a point at which a change in direction of the airflow through the compressor (14) occurs.

10. The TTCC system offtake (101) according to claim 9, wherein the compressor (14) comprises an annular duct defining the airflow path through the compressor, wherein the annular duct comprises a connecting region (108a) arranged to connect portions (108b, 108c) of the annular duct having a different outer radius to each other, and wherein the compressor bleed air outlet (112) is disposed in or near the connecting region (108a).

11. The TTCC system offtake (101) according to any preceding claim, wherein the air input duct (110) is further arranged to provide a supply of pressurised air to a secondary system (130) of the gas turbine engine in addition to the turbine-tip clearance control system, and optionally:
wherein the air input duct (110) is arranged to provide a supply of pressured air to any or more of:
a compressor stability control system;
an air to oil heat exchanger; and
an air to air heat exchanger.

12. A TTCC system (100) for a gas turbine engine (10), comprising:
the TTCC system offtake (101) according to any preceding claim;
a valve (122) fluidly coupled to the exit aperture (114) of the TTCC system offtake (101) to receive airflow from the air input duct (110);
a connection duct (123) fluidly coupled to the valve (122);
a delivery system (123a) fluidly coupled to the connection duct (123), wherein the delivery system (123a) is arranged to deliver airflow from the TTCC system offtake (101) to a casing (17b) of a turbine (17) of the gas turbine engine (10).

13. A gas turbine engine (10) for an aircraft, comprising the TTCC system (100) of claim 12.

14. The gas turbine engine according to claim 13, further comprising:
an engine core (11) comprising a turbine (19), a compressor (14), and a core shaft (26) connecting the turbine to the compressor;
a fan (23) located upstream of the engine core, the fan comprising a plurality of fan blades; and
a gearbox (30) that receives an input from the core shaft (26) and outputs drive to the fan so as to drive the fan at a lower rotational speed than the core shaft,
wherein the compressor bleed air outlet is arranged to receive air from the compressor (14).

15. A method (200) of suppling airflow to a TTCC system in a gas turbine engine (10), comprising:
providing (202) an air input duct (110) in fluid communication with a compressor bleed air outlet (112), the air input duct comprising an exit aperture (114), the exit aperture defining an exit flow path for at least a portion of the air flowing in the air input duct (110) during use of the gas turbine engine; and
separating (204) foreign objects from the airflow in the air input duct (110) by directing airflow through the exit aperture (114), the airflow being directed such that the airflow has at least a component that is anti-parallel to the direction of airflow in the air input duct (110) in a region of the input duct adjacent to the exit aperture (114).
